# EUROPÄISCHE PATENTANMELDUNG

(11) **EP 3 187 568 A1**
(43) Veröffentlichungstag der Anmeldung: **05.07.2017**
(21) Anmeldenummer: 15203009.4
(22) Anmeldetag: 29.12.2015
(51) Int. Cl.: C10G 27/00, B01J 19/00

(54) **ANLAGE ZUR BEHANDLUNG VON DIESELÖL**

(71) Anmelder: AVARUS Suisse Holding AG, 6052 Hergiswil NW (CH)
(72) Erfinder: Schüler, Rolf, 85258 Weichs (DE)
(74) Vertreter: Puschmann Borchert Bardehle Patentanwälte Partnerschaft mbB

(57) **Zusammenfassung**

Eine Anlage zur Behandlung von Dieselöl umfasst einen Vorratsbehälter (4) für das Dieselöl und einen Vorratsbehälter (6) für eine oder mehrere Zugabe-Komponente(n), ausgewählt aus Ozon, Wasserstoffperoxid, Methangas, Biogas und Erdgas, der mit einem Kavitationsreaktor (8) verbunden sind, in dem eine Emulsionsbildung und Oxidation der in dem Dieselöl enthaltenen Schwefelverbindungen zu Sulfonen stattfindet. Der Kavitationsreaktor (8) ist mit einer Trenneinrichtung (10) verbunden, in der eine Abtrennung von wässrigen Bestandteilen und von Dieselbestandteilen in dem von dem Kavitationsreaktor (8) abgegebenen Produkt stattfindet. Die Trenneinrichtung (10) ist mit einem Reaktor (12) verbunden ist, in dem die in dem Kavitationsreaktor (8) erzeugten Sulfone durch Adsorption oder Extraktion entfernt werden. Der Reaktor (12) ist mit einem Vorratsbehälter (14) für das entschwefelte Dieselöl verbunden.

## Beschreibung

Die Erfindung betrifft eine Anlage zur Behandlung von Dieselöl, insbesondere zur Verminderung des Schwefelgehalts des Dieselöls.

Es sind Anlagen zur Behandlung von Dieselöl und der Reduzierung des Schwefelgehalts bekannt, bei denen dem Dieselöl Ozon oder Wasserstoffperoxid zugeführt und damit vermischt wird, um die in den Dieselöl enthaltenen Schwefelverbindungen in Sulfone umzusetzen, die über eine Zentrifuge abgetrennt werden können. Das Problem bei diesen Anlagen besteht darin, dass es außerordentlich schwierig ist, das Ozon oder das Wasserstoffperoxid mit einem vertretbaren Wirkungsgrad in das Dieselöl einzumischen, sodass die Reaktion zwischen der zugegebenen Komponente und den Schwefelverbindungen in dem Dieselöl nur unzureichend stattfindet.

Der Erfindung liegt daher die Aufgabe zu Grunde, eine Anlage zur Verfügung zu stellen, die eine intensive Vermischung der Bestandteile des Dieselöls bewirkt, für eine damit verbundene, weitergehende Umsetzung der Schwefelverbindungen mit der zugegebenen Komponenten sorgt und auch weitere Komponenten, die mit der oder den zugegebenen Komponenten reagieren, weitgehend zu entfernen.

Dazu dient die erfindungsgemäße Anlage zur Behandlung von Dieselöl, bei der ein Vorratsbehälter für das Dieselöl und ein Vorratsbehälter für eine oder mehrere Zugabe-Komponente(n), ausgewählt aus Ozon, Wasserstoffperoxid, Methangas, Biogas und Erdgas, mit einer ersten Kavitationsreaktoreinrichtung verbunden sind, in der eine Emulsionsbildung und Oxidation stattfindet, bei der die erste Kavitationsreaktoreinrichtung mit einer ersten Zentrifuge verbunden ist, in der das von der ersten Kavitationsreaktoreinrichtung abgegebene Produkt zentrifugiert wird, bei der die erste Zentrifuge mit einem Vorratsbehälter für das oxidierte Produkt verbunden ist, bei der Vorratsbehälter für das oxidierte Produkt und ein Vorratsbehälter für ein polares Lösungsmittel mit einer zweiten Kavitationsreaktoreinrichtung verbunden sind, in der eine Emulsionsbildung und Extraktion stattfindet, bei der die zweite Kavitationsreaktoreinrichtung mit einer zweiten Zentrifuge verbunden ist, in der das Produkt entschwefelt wird und die mit einem Vorratsbehälter für das entschwefelte Produkt und mit einer Destillationseinrichtung verbunden ist, in der das entschwefelte Produkt weiterverarbeitet wird.

Kavitationsreaktoreinrichtung zum Behandeln von fließfähigen Substanzen, wobei der Kavitationsreaktoreinrichtung wenigstens zwei Reaktionskomponenten zugeführt, gemischt und zur Reaktion gebracht werden, sind an sich bekannt.

DE 20 2010 000 075 U1 zeigt beispielsweise eine Vorrichtung zur Behandlung von fließfähigen Substanzen, wobei dem Kavitationsreaktor wenigstens zwei Reaktionskomponenten zugeführt, mittels turbulenter Strömungen bzw. Kavitation gemischt und zur Reaktion gebracht werden. Die Vorrichtung hat ein Gehäuse, in dem in Strömungsrichtung eine Zulaufdüse, die die zugeführte Haupt-Komponente als mittig in dem Gehäuse verlaufenden Strahl in Strömungsrichtung abgibt, und ein der Zulaufdüse mittig gegenüberliegender Düsenkopf angeordnet sind, der Kanäle zur Abgabe einer Zugabe-Komponente entgegen der Strömungsrichtung der Haupt-Komponente aufweist, wobei durch Beabstandung der Zulaufdüse von dem Düsenkopf ein Reaktionsraum in dem Gehäuse gebildet ist. Das Gehäuse ist als Rohr ausgebildet, das im Bereich des Düsenkopfes eine Verengung aufweist und in dem die Zulaufdüse, die eine sich in Strömungsrichtung verengende, vorzugsweise konische, Wand aufweist, angeordnet ist. Der Düsenkopf hat mehrere Kanäle, deren Mündungen unter unterschiedlichen radialen Abständen zu einer Mittelachse des Düsenkopfes liegen, und auf der dem Reaktionsraum zugewandten Seite der Zulaufdüse in Abstand dazu eine mit seitlichen Öffnungen versehene, vorzugsweise ebenfalls konische, Trennwand mit einer Austrittsöffnung vor der Düsenöffnung der Zulaufdüse angeordnet ist, wobei die Austrittsöffnung der Trennwand größer ist als die Düsenöffnung der Zulaufdüse.

Hydrodynamische Durchflussreaktoren, die auf der Basis von Kavitation arbeiten, sind auch aus der DE 103 10 442 A1 bekannt, die durch eine entsprechende Anordnung von schwer umströmbaren Körper als Superkavitationsreaktoren ausgebildet werden können. Hierbei handelt es sich meist um statische Bauteile, die durch Versuche für die jeweiligen festen, flüssigen und/oder gasförmigen Strömungs-Komponenten optimiert werden müssen. Eine Regulierungsfunktion wird dann durch Variation des Vordrucks bzw. Verschiebung der Turbulenz erzeugenden Elemente erreicht. Bei diesen hydrodynamischen Reaktoren nach dem Stand der Technik ist daher die Auslegung und die Handhabung umständlich, und den Gegebenheiten diverser Anwendungen kann nur begrenzt Rechnung getragen werden.

Bei den vorstehend genannten Kavitationsreaktoreinrichtung zum Behandeln von fließfähigen Substanzen lässt jedoch der Wirkungsgrad der Umsetzung zwischen den Reaktionskomponenten zu wünschen übrig.

Dazu umfasst der Kavitationsreaktor mit einem ersten, rohrförmigen Gehäuse, mit dem in Strömungsrichtung stromab eine Zulaufeinrichtung verbunden ist, die eine zugeführte Haupt-Komponente als mittig in dem Gehäuse verlaufenden Strahl in Strömungsrichtung abgibt, und in dem ein der Zulaufeinrichtung mittig gegenüberliegender Düsenkopf angeordnet sind, der mehrere Kanäle aufweist, deren Mündungen unter unterschiedlichen radialen Abständen zu einer Mittelachse des Düsenkopfes liegen und durch die wenigstens eine Zugabe-Komponente entgegen der Strömungsrichtung der Haupt-Komponente zuzuführen ist, wobei durch die Beabstandung der Zulaufeinrichtung von dem Düsenkopf (6) ein Reaktionsraum in dem Gehäuse gebildet ist.

Durch den Kavitationsreaktor wird ein Gegenstromsystem verwirklicht, in dem die von der Zulaufeinrichtung abgegebene Strömung auf den Düsenkopf auftrifft und sodann entgegen der Hauptströmungsrichtung, d. h. in Richtung auf die Zulaufeinrichtung, zurückgeworfen wird, wobei die Komponente, die durch die Kanäle in dem Düsenkopf in das System eingeführt wird, der Strömung eine zusätzliche Kraftkomponente in Richtung auf die Zulaufeinrichtung erteilt. Da die Mündungen der Kanäle unterschiedliche radiale Abstände von der Mittelachse des Düsenkopfes haben, wirkt die durch das aus den Kanälen austretende Strömungsmittel erteilte Kraftkomponente großflächig, und es findet eine innige Vermischung der beiden Komponenten in dem Reaktionsraum statt, was die Behandlung des Dieselöls durch die Zugabe-Komponente, beispielsweise Ozon, Wasserstoffperoxid, Methan, Biogas, oder Erdgas erst ermöglicht oder zumindest erheblich beschleunigt. Dabei kann das Dieselöl sowohl von Verunreinigungen befreit als auch aufbereitet werden durch Umsetzung des Gases in zusätzlichen Treibstoff, wobei die Aufbereitung durch Kavitation den bisherigen Verfahren zur Aufbereitung von Dieselöl weit überlegen ist. Die Effizienz der Vorrichtung wird insbesondere durch die hohe Turbulenz in den Strömungen und damit durch Kavitation in einer solchen Weise erhöht, dass auch die Auslegung der Einrichtung vereinfacht wird.

Eine vorteilhafte Ausgestaltung der erfindungsgemäßen Kavitationsreaktorseinrichtung ist dadurch gekennzeichnet, dass die Zulaufeinrichtung ein Zulaufgehäuse mit einem mittigen Zulaufkanal aufweist, der sich von einer eintrittsseitigen Zulauföffnung aus mit einem in Strömungsrichtung trichterförmig ausgebildeten Erweiterungsabschnitt bis zu dem rohrförmigen Gehäuse erstreckt. In dem trichterförmigen Erweiterungsabschnitt des Zulaufkanals findet in vorteilhafter Weise bereits eine Behandlung der Substanz als Vorbereitung zu der intensiveren Behandlung in dem Reaktionsraum statt., sodass der Raum zwischen der Zulaufeinrichtung und dem Düsenkopf optimal für die Behandlung der Substanz genutzt werden kann.

Eine weitere vorteilhafte Ausgestaltung der erfindungsgemäßen Kavitationsreaktorseinrichtung ist dadurch gekennzeichnet, dass der Zulaufkanal eintrittsseitig einen zylindrischen Kanalabschnitt aufweist, an den sich in Strömungsrichtung der Erweiterungsabschnitt anschließt, wobei die Zulaufeinrichtung eine mittig in das Gehäuse gerichtete Strömung der Haupt-Komponente abgibt. Durch den zylindrischen Kanalabschnitt wird die aus dem Kanalabschnitt austretende Hauptkomponente zu einem mittigen Strahl geformt, der in dem Erweiterungsabschnitt der Zulaufeinrichtung radialgerichtete Bewegungskomponenten erhält und damit bereits für eine Verkörperung der Haupt-Komponenten sorgt, sodass der Ablauf der Kavitation bereits beim Eintritt in den Reaktionsraum begünstigt wird.

Eine weitere vorteilhafte Ausgestaltung der erfindungsgemäßen Kavitationsreaktorseinrichtung ist dadurch gekennzeichnet, dass das Zulaufgehäuse mehrere parallel zur Strömungsrichtung verlaufende Hilfs-Zulaufkanäle aufweist, die eintrittsseitig unter radialen Abständen zu dem Zulaufkanal liegen und in dem konischen Erweiterungsabschnitt enden. In Versuchen hat sich gezeigt, dass die Hilfs-Zulaufkanäle zu einer noch stärkeren Verwirbelung und Vermischung der Reaktions-Komponenten in dem Reaktionsraum führt, indem dort Wirbelströme entstehen. Andererseits kann beim Einsatz der Hilfs-Zulaufkanäle der zum Betreiben der Vorrichtung erforderliche Druck deutlich herabgesetzt werden. Während eine Vorrichtung ohne die Hilfs-Zulaufkanäle beispielsweise 8 bar benötigt, kommt die Vorrichtung mit den Hilfs-Zulaufkanälen mit 0,8 bar aus, was für das Betreiben der Vorrichtung außerordentlich vorteilhaft ist.

Eine weitere vorteilhafte Ausgestaltung der erfindungsgemäßen Kavitationsreaktorseinrichtung ist dadurch gekennzeichnet, dass in der Mitte des Düsenkopfes eine Prallfläche ohne Kanäle für den von der Zulaufeinrichtung abgegebenen Strahl vorgesehen ist. Indem der aus der Zulaufeinrichtung austretende Strahl nicht auf einen Kanal in dem Düsenkopf sondern auf die Prallfläche auftrifft, wird die Strömungsumkehr des aus der Zulaufeinrichtung austretenden Strahles mit Sicherheit erreicht. Außerdem trifft das Strömungsmittel, das aus den Kanälen des Düsenkopfes austritt, in einem Bereich seitlich von dem von der Zulaufeinrichtung abgegebenen Hauptstrahl auf die rückläufige Strömung auf, was die Strömungskinetik in dem Reaktionsraum verbessert.

Eine weitere vorteilhafte Ausgestaltung der erfindungsgemäßen Kavitationsreaktorseinrichtung ist dadurch gekennzeichnet, dass die Kanäle des Düsenkopfes außerhalb der Prallfläche auf Kreisen mit unterschiedlichen Radien zu der Mittelachse des Düsenkopfes angeordnet sind. Dadurch wird eine gleichmäßige flächige Verteilung der Mündungen der Kanäle in dem Düsenkopf erreicht, was eine ebenso vorteilhafte flächige Verteilung der aus den Kanälen austretenden Strömungsmittel bewirkt.

Eine weitere vorteilhafte Ausgestaltung der erfindungsgemäßen Kavitationsreaktorseinrichtung ist dadurch gekennzeichnet, dass die Mündungen der Kanäle auf einer Einhüllendenfläche liegen, die sich von der Prallfläche in Richtung zu der Zulaufeinrichtung hin erweiternd zu einem äußeren Rand des Düsenkopfes erstreckt, wobei die Einhüllendenfläche vorzugsweise eine becherförmige, weiter bevorzugt eine konische Fläche ist. Bei dieser Anordnung wird nicht nur eine großflächige, sondern auch eine räumliche Verteilung der Mündungen der Kanäle in dem Düsenkopf erreicht, was zu einer weiteren Verbesserung der Durchmischung der aus den Kanälen austretenden Strömungen mit der von der Zulaufeinrichtung kommenden Strömung führt.

Eine weitere vorteilhafte Ausgestaltung der erfindungsgemäßen Kavitationsreaktorseinrichtung ist dadurch gekennzeichnet, dass der Düsenkopf auf einer Halterung gelagert ist, die eine mittige Durchtrittsöffnung für die Einleitung der Zugabe-Komponente in den Düsenkopf aufweist, wobei die Durchtrittsöffnung über Verbindungskanäle mit jeweils einer Einlassöffnung zur Zufuhr jeweils einer Zugabe-Komponente in die Verbindungskanäle verbunden ist. Im Falle von mehreren Zugabe-Komponenten werden in vorteilhafter Weise diese bereits in den Verbindungskanälen vor gemischt und dann gemeinsam durch den Düsenkopf in den Reaktionsraum zugeführt.

Dieselöl ist bekanntlich stark mit Fremdstoffen belastet und enthält Bestandteile wie Teer, Wachs und Schwefel in größeren Mengen. Beim Durchlauf des Dieselöls durch die Kavitationsreaktor oder durch eine Kombination der beiden Kavitationsreaktoren werden die Bestandteile des Dieselöls, zwischen denen keine Reaktion stattfindet, miteinander vermischt und homogenisiert, während die Komponenten, zwischen denen eine Reaktion stattfindet, beispielweise Schwefelverbindungen, die mit zugeführtem Ozon oder Wasserstoff-Peroxyd reagiert, in Substanzen umgesetzt werden, die danach aus dem Dieselöl abgetrennte werden können..

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

Es zeigen:
- Figur 1: eine Anlage zur Behandlung von Dieselöl,
- Figur 2: einen schematischen Schnitt durch ein Ausführungsbeispiel des Kavitationsreaktors;
- Figur 3: eine Draufsicht auf einen Düsenkopf mit Blickrichtung entlang der Hauptströmungsrichtung;
- Figur 4: einen Schnitt durch den Düsenkopf von Figur 3 entlang der Linie A - A;
- Figur 5: eine Draufsicht auf eine Halterung für den Düsenkopf; und
- Figur 6: einen Schnitt durch einen Teil der Halterung.

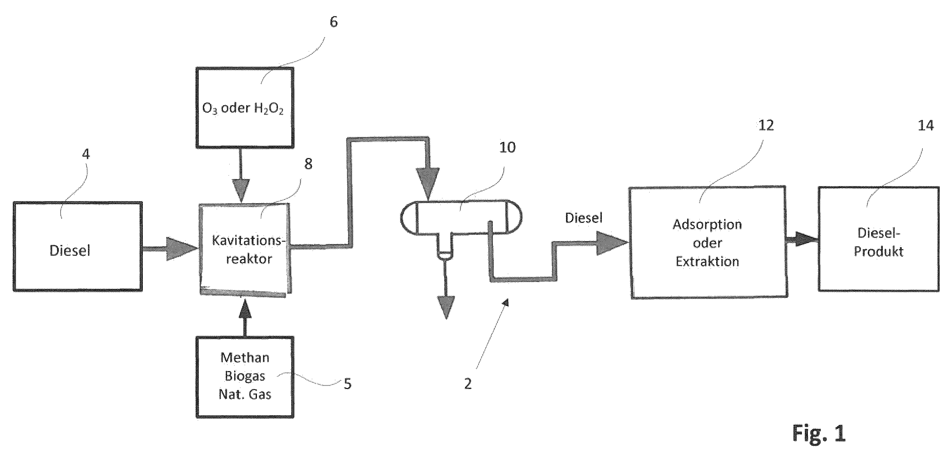

Nach Figur 1 umfasst eine Anlage zur Behandlung von Dieselöl einen Vorratsbehälter 4 für das Dieselöl und einen Vorratsbehälter 6 für eine oder mehrere Zugabe-Komponente(n) ausgewählt aus Ozon, Wasserstoffperoxid, Methangas, Biogas und Erdgas, die mit einem Kavitationsreaktor 8 verbunden sind, in dem eine Emulsionsbildung und Oxidation der in dem Dieselöl enthaltenen Schwefelverbindungen zu Sulfonen stattfindet. Der Kavitationsreaktor 8 ist mit einer Trenneinrichtung 10 verbunden, in der eine Abtrennung von wässrigen Bestandteilen und von Dieselbestandteilen in dem von dem Kavitationsreaktor 8 abgegebenen Produkt stattfindet. Die Trenneinrichtung 10 ist mit einem Reaktor 12 verbunden, in dem die in dem Kavitationsreaktor 8 erzeugten Sulfone durch Adsorption oder Extraktion entfernt werden. Das von dem Reaktor 12 abgegebene Endprodukt wird von dem Reaktor 12 in einen Vorratsbehälter 14 für das entschwefelte Dieselöl überführt.

Um die Effizienz einer derartigen Anlage zu optimieren, wird der unten beschriebene Kavitationsreaktor 8 zum Behandeln von Dieselöl eingesetzt, wobei dem Kavitationsreaktor 8 wenigstens zwei Zugabe-Komponenten ausgewählt aus Ozon, Wasserstoffperoxid, Methangas, Biogas und Erdgas, und Dieselöl als Haupt-Komponente zugeführt, gemischt und zur Reaktion gebracht werden

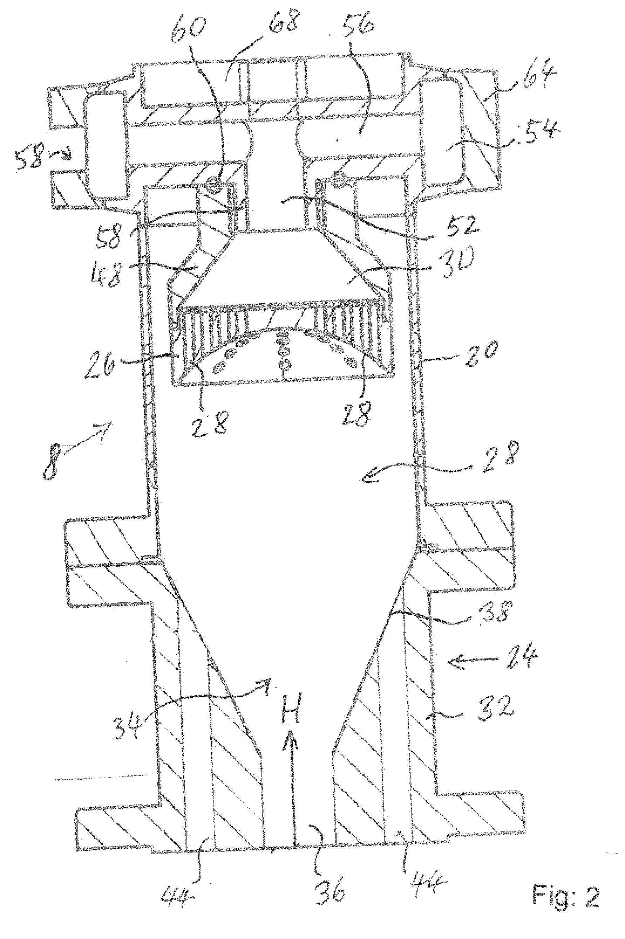

Gemäß Figur 2 umfasst der Kavitationsreaktor 8 ein rohrförmiges Gehäuse 20, das als zylindrisches Rohr ausgebildet ist und mit dem in Strömungsrichtung H stromab eine Zulaufeinrichtung 22 verbunden ist, die das zugeführte Dieselöl in das Gehäuse 20 abgibt. In dem Gehäuse 20 ist ein Düsenkopf 26 angeordnet, der einer Zulaufeinrichtung 24 mittig gegenüberliegt. Der Düsenkopf 26 hat mehrere Kanäle 28, deren Mündungen unter unterschiedlichen radialen Abständen zu einer Mittelachse des Düsenkopfes 26 liegen und zur Abgabe von einer Zugabe-Komponente oder mehrerer Zugabe-Komponenten entgegen der Strömungsrichtung H der Haupt-Komponente in einen Reaktionsraum 28 dienen, der durch die Beabstandung der Zulaufeinrichtung 24 von dem Düsenkopf 26 in dem Gehäuse 20 gebildet wird. Die Kanäle 28 werden über eine Zufuhrkammer 30 gespeist.

Die Zulaufeinrichtung 24 hat in einem Zulaufgehäuse 32 einen mittigen Zulaufkanal 34, der eintrittsseitig einen zylindrischen Kanalabschnitt 36 und einen daran in Strömungsrichtung H anschließenden, im Querschnitt konischen Erweiterungsabschnitt 38 aufweist, der bis zu dem rohrförmigen Gehäuse 20 reicht. Die Haupt-Komponente wird durch eine Eintrittsmündung 40 in den Kanalabschnitt 36 eingeleitet.

Das Zulaufgehäuse 32 hat mehrere, beispielsweise vier, parallel zur Strömungsrichtung H verlaufende Hilfs-Zufuhrkanäle 44, die eintrittsseitig unter radialen Abständen zu dem Kanalabschnitt 36 liegen und in dem konischen Erweiterungsabschnitt 38 enden.

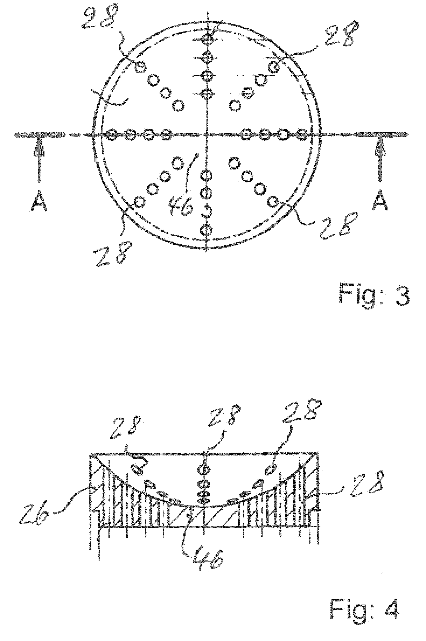

Wie aus den Figuren 3 und 4 zu ersehen ist, ist in der Mitte des Düsenkopfes 26 eine Prallfläche 46 ohne Kanäle für den von der Zulaufeinrichtung 24 abgegebenen Strahl vorgesehen. Die Kanäle 28 des Düsenkopfes 26 außerhalb der Prallfläche 46 sind auf Kreisen mit unterschiedlichen Radien zu der Mittelachse des Düsenkopfes 26 angeordnet. Ferner liegen die Mündungen der Kanäle 28 auf einer Einhüllendenfläche, die eine becherförmige, vorzugsweise konische Fläche ist und die sich von der Prallfläche 46 in Richtung zu der Zulaufeinrichtung 24 hin erweiternd zu einem äußeren Rand des Düsenkopfes 26 erstreckt.

Der Düsenkopf 26 ist austauschbar, indem der Düsenkopf 26 über einen Sockel 48 auf einer Halterung 50 gelagert ist, die eine mittige Durchtrittsöffnung 52 für die Einleitung der Zugabe-Komponente(n) in den Düsenkopf 26 aufweist, wobei die Durchtrittsöffnung 52 über Verbindungskanäle 54, 56 mit einer Einlassöffnung 58 oder mehreren Eintrittsöffnungen im Fall von mehreren Zugabe-Komponenten zur Zufuhr der Zugabe-Komponente(n) mit den Verbindungskanälen 54, 56 verbunden ist. Wenn mehrere Zugabe-Komponenten eingesetzt werden, ist jeweils eine Einlassöffnung zur Zufuhr jeweils einer Zugabe-Komponente vorgesehen. Der Sockel 48 ist auf einen Bund 58 der Halterung 50 aufgesetzt und über eine Ringdichtung 60 abgedichtet.

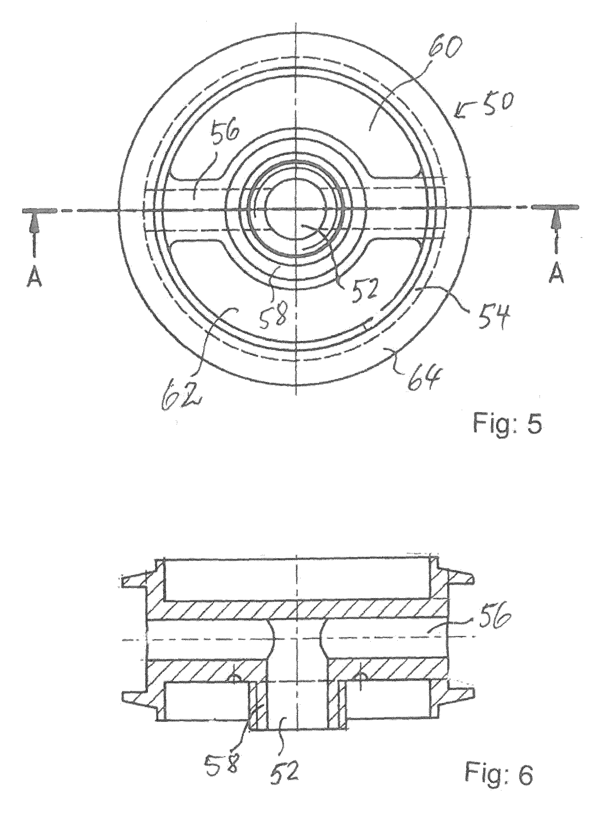

In Figur 5 ist eine Draufsicht auf die Halterung 50 mit dem Bund 58 für den Sockel 48 des Düsenkopfes 26 gezeigt. Die Verbindungskanäle 54, 56 umfassen einen Ringkanal 54, mit dem die Einlassöffnung(en) verbunden ist/sind, und einen diagonal zu der Halterung 50 verlaufenden, geraden Verbindungskanal 56, wobei der Verbindungskanal 56 den Ringkanal 54 mit der Durchtrittsöffnung 52 verbindet. Die in Figur 6 im Schnitt gezeigten Verbindungskanäle 54, 56 sind in Figur 5 durch gestrichelte Linien angedeutet. Aus Figur 5 ist ferner zu ersehen, dass das Dieselöl durch Austrittsöffnungen 60, 62 aus dem erfindungsgemäßen Kavitationsreaktor 8 austreten kann.

In Figur 6 ist ein Schnitt durch einen Teil der Halterung 50 des Düsenkopfes 26 darstellt, welcher durch einen Außenring 64, der in den Figuren 2 und 5 gezeigt ist, zur kompletten Halterung 50 vervollständigt wird. Das behandelte Dieselöl verlässt den Kavitationsreaktor 8 über die Austrittsöffnungen 60, 62 und eine Haupt-Austrittsöffnung 68.

## Patentansprüche

1. Anlage zur Behandlung von Dieselöl, bei der
ein Vorratsbehälter (4) für das Dieselöl und ein Vorratsbehälter (6) für eine oder mehrere Zugabe-Komponente(n), ausgewählt aus Ozon, Wasserstoffperoxid, Methangas, Biogas und Erdgas, mit einem Kavitationsreaktor (8) verbunden sind, in dem eine Emulsionsbildung und Oxidation der in dem Dieselöl enthaltenen Schwefelverbindungen zu Sulfonen stattfindet, bei der
der Kavitationsreaktor (8) mit einer Trenneinrichtung (10) verbunden ist, in der eine Abtrennung von wässrigen Bestandteilen und von Dieselbestandteilen in dem von dem Kavitationsreaktor (8) abgegebenen Produkt stattfindet, bei der
die Trenneinrichtung (10) mit einem Reaktor (12) verbunden ist, in dem die in dem Kavitationsreaktor (8) erzeugten Sulfone durch Adsorption oder Extraktion entfernt werden und bei der
der Reaktor (12) mit einem Vorratsbehälter (14) für das entschwefelte Dieselöl verbunden ist

2. Anlage nach Anspruch 1, **dadurch gekennzeichnet, dass** der Kavitationsreaktor (8) umfasst ein rohrförmiges Gehäuse (2), mit dem in Strömungsrichtung (H) stromab eine Zulaufeinrichtung (4) verbunden ist, die eine zugeführte Haupt-Komponente als mittig in dem Gehäuse (2) verlaufenden Strahl in Strömungsrichtung (H) abgibt, und in dem ein der Zulaufeinrichtung (4) mittig gegenüberliegender Düsenkopf (6) angeordnet sind, der mehrere Kanäle aufweist, deren Mündungen unter unterschiedlichen radialen Abständen zu einer Mittelachse des Düsenkopfes (6) liegen und durch die wenigstens eine Zugabe-Komponente entgegen der Strömungsrichtung (H) der Haupt-Komponente zuzuführen ist, wobei durch die Beabstandung der Zulaufeinrichtung (4) von dem Düsenkopf (6) ein Reaktionsraum (14) in dem Gehäuse (2) gebildet ist.

3. Anlage nach Anspruch 2, **dadurch gekennzeichnet**, **dadurch gekennzeichnet, dass** die Zulaufeinrichtung (4) ein Zulaufgehäuse (16) mit einem mittigen Zulaufkanal (18) aufweist, der sich von einer eintrittsseitigen Zulauföffnung (24) aus mit einem in Strömungsrichtung (H) trichterförmig ausgebildeten Erweiterungsabschnitt (22) bis zu dem rohrförmigen Gehäuse (2) erstreckt.

4. Anlage nach Anspruch 3, **dadurch gekennzeichnet**, **dadurch gekennzeichnet, dass** der Zulaufkanal (18) eintrittsseitig einen zylindrischen Kanalabschnitt (20) aufweist, an den sich in Strömungsrichtung (H) der Erweiterungsabschnitt (22) anschließt, wobei die Zulaufeinrichtung (4) eine mittig in das Gehäuse (2) gerichtete Strömung der Haupt-Komponente abgibt.

5. Anlage nach Anspruch 2 oder 3, **dadurch gekennzeichnet**, **dadurch gekennzeichnet, dass** das Zulaufgehäuse (16) mehrere parallel zur Strömungsrichtung (H) verlaufende Hilfs-Zulaufkanäle (26) aufweist, die eintrittsseitig unter radialen Abständen zu dem mittigen Zulaufkanal (18) liegen und in dem konischen Erweiterungsabschnitt (22) enden.

6. Anlage nach Anspruch 2, **dadurch gekennzeichnet**, **dadurch gekennzeichnet, dass** in der Mitte des Düsenkopfes (6) eine Prallfläche (28) ohne Kanäle für die von der Zulaufeinrichtung (4) abgegebenen Strömung vorgesehen ist.

7. Anlage nach Anspruch 6, **dadurch gekennzeichnet**, **dadurch gekennzeichnet, dass** die Kanäle (8) des Düsenkopfes (6) außerhalb der Prallfläche (28) auf Kreisen mit unterschiedlichen Radien zu der Mittelachse des Düsenkopfes (6) angeordnet sind.

8. Anlage nach Anspruch 7, **dadurch gekennzeichnet, dass** die Mündungen der Kanäle (8) auf einer Einhüllendenfläche liegen, die sich von der Prallfläche 28 in Richtung zu der Zulaufeinrichtung (4) hin erweiternd zu einem äußeren Rand des Düsenkopfes (6) erstreckt.

9. Anlage nach Anspruch 2, **dadurch gekennzeichnet, dass** der Düsenkopf (6) auf einer Halterung (32) gelagert ist, die eine mittige Durchtrittsöffnung (34) für die Einleitung der Zugabe-Komponente(n) in den Düsenkopf (6) aufweist, wobei die Durchtrittsöffnung (34) über Verbindungskanäle (36,38) mit jeweils einer Einlassöffnung (40) zur Zufuhr jeweils einer Zugabe-Komponente in die Verbindungskanäle (36,38) verbunden ist.
